(19) **Europäisches Patentamt / European Patent Office / Office européen des brevets**

(11) **EP 1 447 172 B1**

(12) **EUROPEAN PATENT SPECIFICATION**

(45) Date of publication and mention
of the grant of the patent:
**11.07.2007 Bulletin 2007/28**

(51) Int Cl.:
*B24B 5/42* (2006.01)     *B24B 19/12* (2006.01)
*B24B 21/00* (2006.01)     *B24B 53/007* (2006.01)

(21) Application number: **04002249.3**

(22) Date of filing: **02.02.2004**

(54) **Surface finishing apparatus and method**

Vorrichtung und Verfahren zur Oberflächen-Endbearbeitung

Appareil et procédé de finition des surfaces

(84) Designated Contracting States:
**DE FR GB**

(30) Priority: **12.02.2003 JP 2003034064**
**12.02.2003 JP 2003034088**
**14.02.2003 JP 2003036701**
**05.03.2003 JP 2003058954**
**05.03.2003 JP 2003058964**
**12.03.2003 JP 2003066595**

(43) Date of publication of application:
**18.08.2004 Bulletin 2004/34**

(73) Proprietor: **NISSAN MOTOR CO., LTD.**
**Yokohama-shi**
**Kanagawa-ken (JP)**

(72) Inventors:
• **Omata, Masahiro**
**Yokohama-shi**
**Kanagawa-ken (JP)**
• **Iizumi, Masahiko**
**Fujisawa-shi**
**Kanagawa-ken (JP)**
• **Hasegawa, Kiyoshi**
**Yokohama-shi**
**Kanagawa-ken (JP)**
• **Ogino, Takashi**
**Yokohama-shi**
**Kanagawa-ken (JP)**

• **Kondo, Tomohiro**
**Mishima-shi**
**Shizuoka-ken (JP)**
• **Takeda, Kazuo**
**Odawara-shi**
**Kanagawa-ken (JP)**
• **Watanabe, Takafumi**
**Yokohama-shi**
**Kanagawa-ken (JP)**
• **Chida, Yoshiyuki**
**Yokohama-shi**
**Kanagawa-ken (JP)**
• **Matsushita, Yasushi**
**Yokohama-shi**
**Kanagawa-ken (JP)**

(74) Representative: **Weber, Joachim**
**Hoefer & Partner**
**Patentanwälte,**
**Gabriel-Max-Strasse 29**
**81545 München (DE)**

(56) References cited:
**EP-A- 1 027 956**     **DE-A- 19 602 974**

• **PATENT ABSTRACTS OF JAPAN vol. 1996, no. 01, 31 January 1996 (1996-01-31) -& JP 07 237116 A (FUJI HEAVY IND LTD), 12 September 1995 (1995-09-12)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a lapping apparatus and a lapping method, and in particular, to a lapping apparatus and a lapping method using a lapping abrasive film (hereafter called "lapping film" or "film") as a tool.

Recent spreads of need to high-precision work have called attention to a succeeded ultra finish using a lapping film.

For ultra finish, an abrasive face of a lapping film is pressed on a work with a pushing shoe at the back, and the work is rotated and oscillated to be lapped, as in Japanese Patent Application Laying-Open Publication No. 7-237116.

The abrasive face of lapping film has a multiplicity of abrasive particles adhering thereto, and tends to be soon blocked, with a resultant deterioration of abrasivity.

DE 196 02 974 A describes a lapping apparatus using a lapping film and comprising a film feed system for the lapping film. Furthermore, there is provided a first drive to rotate a work. The lapping film is pressed to the work by three shoes. Furthermore, there is a shoe set handler configured to handle the shoe set to press the film against the work. The lapping apparatus is controlled by a control system for controlling the film feed system to feed the film. Between the shoes, there is arranged a cleaner to clean the film.

EP-A-1 027 956 refers to a lapping apparatus comprising a lapping film as well as a film feed system. Furthermore, there is provided a first drive to rotate a work. Furthermore, there is provided a shoe set including a first shoe and a second shoe as well as a shoe set handler configured to handle the shoe set to press the film against the work. A film feed system for feeding the film is controlled by a control system.

It is an object of the present invention to provide a lapping apparatus and a lapping method which prevent undue deterioration of the lapping film and provide the possibility to use the lapping film in the most effective manner.

According to the invention, the object is solved by the features of the independent claims. The respective sub-claims contain further preferred developments of the invention.

## BRIEF DESCRIPTION OF THE DRAWINGS

The above and further objects and novel features of the present invention will more fully appear from the following detailed description when the same is read in conjunction with the accompanying drawings, in which:

Fig. 1 is a left side elevation of a lapping apparatus according to an embodiment of the invention;
Fig. 2 is a rear view of a close state of a lap of the apparatus of Fig. 1;

Fig. 3 is a rear view of an open state of the lap of Fig. 2;
Fig. 4 is a detail "A" of Fig. 2;
Fig. 5 is a film feed timing chart of the lap of Fig. 2;
Fig. 6 is a film feed timing chart of a lap of a lapping apparatus according to a first modification of the embodiment;
Fig. 7 is a film feed timing chart of a lap of a lapping apparatus according to a second modification of the embodiment;
Fig. 8 is a diagram of a lap control system of a lapping apparatus according to a third modification of the embodiments;
Fig 9. is a sectionnal view of a film of the lap.

## DETAILED DESCRIPTION OF THE PREFERRED EMBODIMENTS

There will be described below an embodiment of the present invention, as well as modifications of some of them, with reference to the accompanying drawings. Like members or elements are designated by like reference characters.

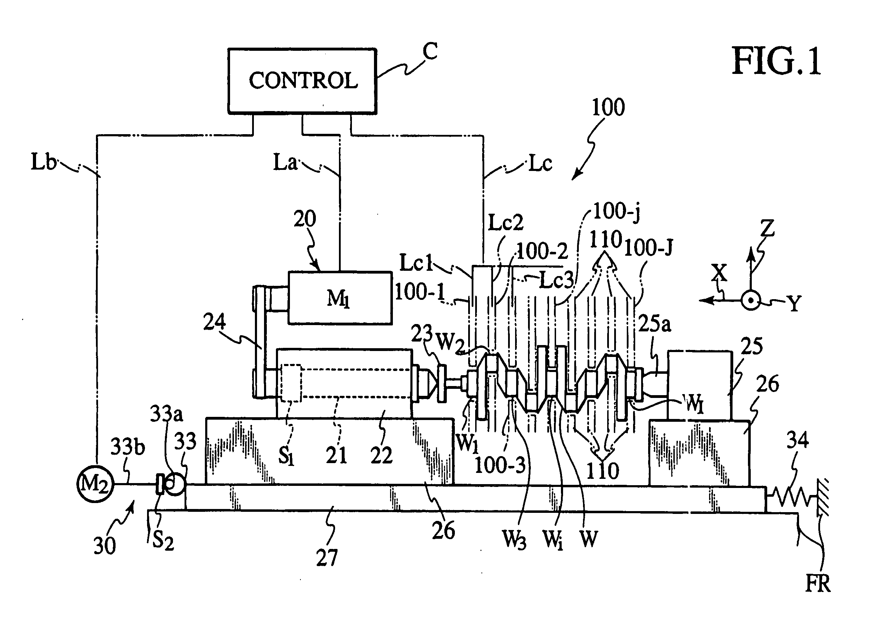

Description is now made of an embodiment of the invention, with reference to Fig. 1 to Fig. 5.

Fig. 1 shows a lapping apparatus 100 as a machine tool according to the embodiment, in a three-dimensional space defined by an orthogonal X-Y-Z coordinate system, where the apparatus 100 has a machine-longitudinal direction parallel to an X-axis, a machine-transverse direction parallel to a Y-axis, and a machine height along a Z-axis.

The lapping apparatus 100 includes a machine frame FR fixed to a foundation (not shown), a lower table 27 mounted on the frame FR and configured to be longitudinally displaced in a sliding manner relative to the frame FR, and a pair of front and rear upper tables 26 each respectively mounted on the lower table 27 and configured to be transversely displaced in a sliding manner relative to the lower table 27. Tables 26, 27 have their screw-feed systems (not shown) controlled from an NC (numerical controlling) controller C (serving as the brain of an abrasivity deterioration delayer).

The front upper table 26 has a head stock 22 mounted thereon and provided with a spindle 21 rotatable together with a chuck 23. The rear upper table 26 has a tail stock 25 mounted thereon and provided with a center 25a. The chuck 23 is adapted to chuck one longitudinal end of a work W (e.g. crankshaft as in Fig. 1), cooperating with the center 25a supporting another longitudinal end of the work W, to set this W in position for lapping.

The spindle 21 is driven to rotate from a spindle drive motor M1, via a drive belt 24. The rotation of spindle 1 is detected (in terms of angular displacement and/or angular velocity or rpm (number of revolutions per minute)) by an encoder S1, of which a detection signal is input to the controller C. As the motor M1 is controlled from the controller C via a command line La, the work W is controlled to rotate about its longitudinal axis between the chuck 23 and the center 25a.

Accordingly, the work W is driven into rotation by "an operatively connected combination of motor M1, belt 24, and spindle 21" constituting an NC-controlled transversely rotary drive mechanism 20, which may include encoder S1 and involve chuck 23 and center 25a to constitute a work holder.

The lower table 27 is normally biased frontward, by a set of springs 34 as parallel resilient members compressed between a rear edge of the table 27 and an opposing member of the machine frame FR, so that a front edge of the table 27 is brought into contact with the circumference of a circular cam 33 fit or fixed on an eccentric drive shaft 33a. This shaft 33a is driven to rotate from a drive motor M2, via a gearset 33b. The rotation of shaft 33a is detected (in terms of angular displacement and/or angular velocity or rpm) by an encoder S2, of which a detection signal is input to the controller C. The motor M2 is controlled from the controller C, via a command line Lb. As the cam 33 eccentrically rotates about the shaft 33a, the lower table 27 is driven into reciprocal longitudinal movements, together with upper tables 26 and stocks 22, 25 thereon.

Accordingly, the work W held between chuck 23 and center 25a is caused to longitudinally oscillate, by "a cooperative combination of motor M2, gearset 33b, shaft 33a, cam 33, and springs 34" constituting an NC-controlled longitudinally reciprocal or oscillatory drive mechanism 30, which may include encoder S2, upper and lower tables 26, 27, and stocks 22, 25.

The oscillation of work W has an amplitude depending on an offset amount of the eccentric shaft 33a, i.e., the distance between a geographical center of the cam 33 and a rotation axis of the shaft 33a. The number of oscillations per unit time depends on rpm of motor M2, and the instantaneous velocity of oscillation depends on a cosine of the offset amount times the motor rpm. The offset amount may well be adjusted by insertion of a distance piece or adjust plate between the shaft 33a and a mount-hole of loose-fit cam 33, or by use of a distance element expansive with a controllable fluid pressure.

The work W may have been molded or rolled, pressed, deformed and/or welded, and cut, milled, drilled and/or ground, as necessary, to be machined (e.g. fine-smoothed or polished for super surfacial finish) at the lapping apparatus 100. The work W has a total number of I (I = predetermined integer) parts {W1 (e.g. journal), W2 (e.g. pin), W3,..., Wi (i = arbitrary integer, $1 \leqq i \leqq I$), ..., WI} to be machined there (at 100), which parts Wi may have their machining conditions different from each other in material, workability, spatial position, peripheral configuration to be curvilinear, and/or surface roughness, for example. In this embodiment, the peripheral configuration is assumed to be circular for comprehension.

The lapping to work W is effected by a longitudinal array of a total number of J (J = predetermined integer, $J \leqq I$ ) selective and removable or replaceable laps {100-1,100-2,100-3, ..., 100-j (j = arbitrary integer, $1 \leqq j \leqq J$), ..., 100-J each respectively constituted with a pair of transversely extending upper and lower laps 110. The J laps 100-j are controllable synchronously or asynchronously from the controller C, via a command line Lc to be branched as necessary (e.g. into branches Lc1, Lc2, Lc3, ..., Lcj, ..., LcJ). In this embodiment, it is assumed for comprehension that J = I, and the control be synchronous.

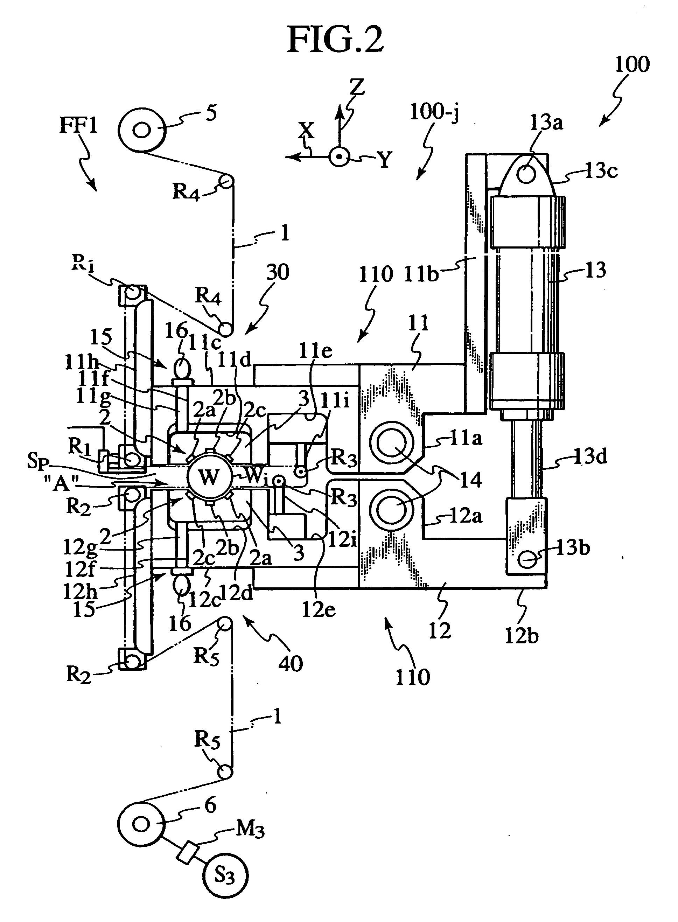

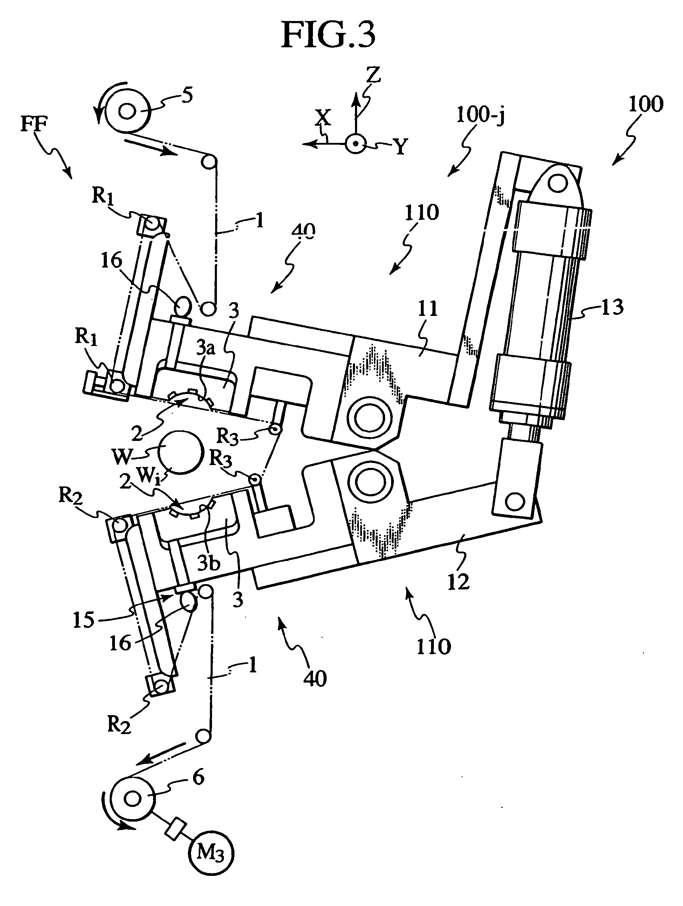

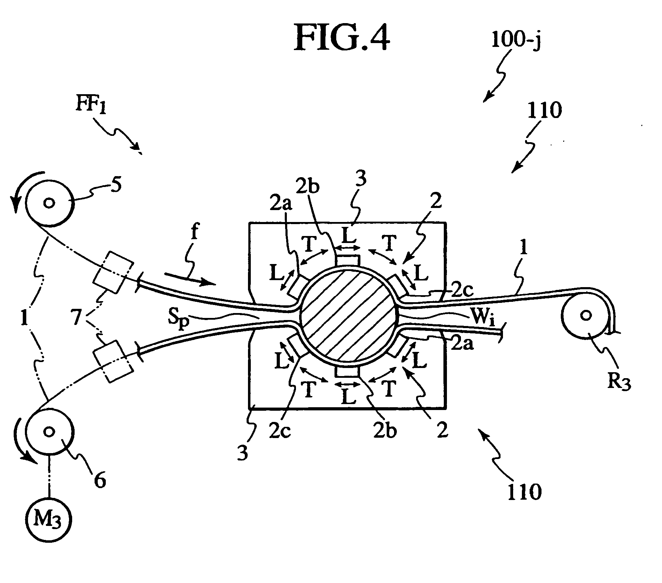

Fig. 2 shows a close state of a lap 100-j of the apparatus 100, and Fig. 3, an open state of the lap 100-j. Fig. 4 is a detail "A" of Fig. 2.

The lap 100-j is constituted with the upper and lower laps 110 adapted to cooperatively lap the work part Wi by using fed lengths of a lapping film 1, a film feed system FF1 adapted for controlled feed of the film 1, and a fluid-pressure (e.g. hydraulic or pneumatic) cylinder 13 operable, under control from the controller C, for vertical actuation of the upper and lower laps 110 to be swung CW and CCW about machine-longitudinally extending upper and lower support pins 14, respectively, for open-close operations of lap 100-j. The support pins 14 are fixed to adequate members of the machine frame FR.

The upper and lower laps 110 are configured with machine-transversely extending upper and lower pushing arms 11,12, respectively. The upper and lower pushing arms 11,12 are pivoted at their mutually approaching bulged central parts 11a, 12a on the upper and lower support pins 14. The pushing arms 11, 12 are further pivoted at distal ends of their Z-bent or straight right extensions 11b, 12b on transversely extending pins 13a, 13b, which are fixed to a cylinder head 13a and a distal end of a piston rod 13b of the fluid-pressure cylinder 13.

To serve as pushers for holders (2) of film pressing elements (2), the arms 11, 12 have upper and lower left extensions 11c, 12c, respectively, which extend beyond an axial centerline of the spindle 21 (Fig. 1), perpendicularly crossing the centerline and the work part Wi in plan view. The upper and lower left extensions 11c, 12c are formed at their opposing sides respectively with upper and lower left recesses 11d, 12d for accommodating upper and lower shoe cases 3 (as pressing element holders) to be vertically slidably fit therein, and upper and lower right recesses 11e, 12e for accommodating upper and lower film rollers R3 to be fixed thereto. The left extensions 11c, 12c are provided with upper and lower oval cams 16 at their vertically outer sides, and have upper and lower through holes 11f, 12f formed respectively between the vertically outer sides and bottoms of the upper and lower recesses 11d, 12d, for insertion of upper and lower push rods 11g, 12g normally biased to be slid therealong to follow movements of the upper and lower cams 16.

The cams 16 are rotatably fit on support shafts (not shown) fixed to the left extensions 11c, 11d, and controllable C for rotation to push the shoe cases 3 vertically inward, by manual operations or under NC control of the controller C. Rotation of each cam 16 may be detected and input to the controller C.

The upper and lower shoe cases 3 are formed at their opposing sides with transversely extending upper and lower arcuate recesses 3a, 3b (Fig. 3), and have a pair of upper and lower sets 2 of transversely extending first, second, and third shoes 2a, 2b, 2c (as film pressing elements) shaped substantially trapezoidal in cross section and embedded in the shoe cases 3, at arcuate intervals T (Fig. 4), to be held by these cases 3, as well as by the arms 11, 12. The shoes 2a, 2b, 2c have their exposed sides shaped arcuate in section, with an arcuate width or arc length L (Fig. 4), to be conformal to corresponding surface regions of work part Wi to be lapped. They 2a, 2b, 2c are made of rubber, synthetic resin, metal (e.g. aluminum) or metal alloy to be sufficiently rigid for the lapping.

Accordingly, in the lap 100-j, each shoe set 2 is conformally pushed against the work part Wi, with the film 1 pressed therebetween, by "a combination of shoe case 3, rod 11g or 12g, cam 16, arm 11 or 12; cylinder 13, and pin 14" constituting a shoe set handler as a shoe pushing mechanism 40, which includes "a combination of rod 11g or 12g and cam 16" serving as a pushing force adjuster or regulator 15. Regulator 15 may be replaced by a hydraulic or pneumatic cylinder controlled from the controller C.

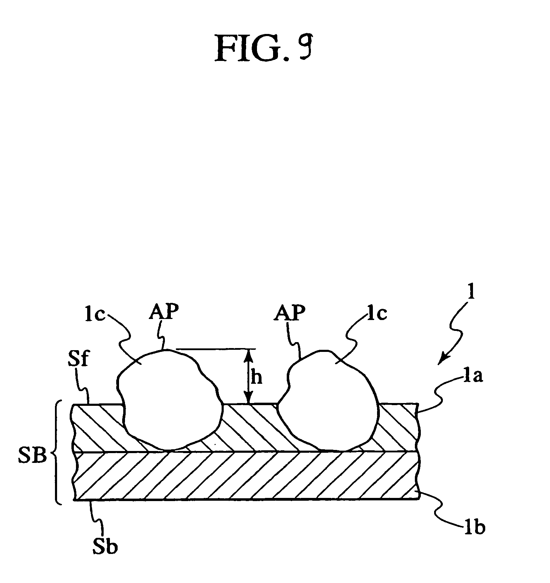

The lapping film 1 (refer to Fig. 9) is provided as a reeled length of tape-shaped well-flexible but non-expansive thin layer or lamination (called "substrate") SB having a face Sf as an abrasive front or right side to be pressed against a work part Wi to be lapped, and a back Sb as a smooth rear or wrong side to be pressed by shoes 2, as the shoes 2 are pushed by shoe cases 3 as well as by arms 11, 12. The substrate SB is made of polyester at least at the face Sf (e.g. 1a in Fig. 9), and has a thickness within a range of about $25\mu m$ to about $130\mu m$. Along the length or intermittent lengths at intervals of film 1, the face Sf of substrate SB has uniformly distributed abrasive particles AP (e.g. 1c in Fig. 9) embedded therein or attached as adherend thereto by adhesive. The abrasive particles AP are made of an abrasive material (e.g. aluminum oxide, silicon carbide, diamond), and have particle sizes within a range of several $\mu m$ to about $200\mu m$. At the back Sb (e.g. 1b in Fig. 9), the substrate SB is made of a slip-preventive material (e.g. rubber, synthetic resin), which may be roughed or otherwise processed or treated for slip prevention.

The film feed system FF1 is configured with a film supply reel 5 for releasing lengths of film 1 to be supplied for the lapping, a film take-up reel 6 for winding lengths of film 1 to be taken up past the lapping, and a necessary number of film feed rollers Rk (k = 1,2,3,4,5) for assisting film feed and/or changing film feed direction, without binding or interference. They 5, 6, Rk are supported by the frame FR (Fig. 1), upper arm 11, or lower arm 12. The frame FR supports the supply reel 5, take-up reel 6, supply assisting rollers R4, and take-up assisting rollers R5.

The upper and lower arms 11, 12 have a pair of vertically extending and relatively long upper and lower roller support members 11h, 12h fixed to left ends of their left extensions 11c, 12c, and a pair of relatively short upper and lower roller support parts 11i, 12i provided in the upper and lower right recesses 11e, 12e of the left extensions 11c, 12c. The upper support member 11h is configured to support a pair of supply side direction changing upper and lower rollers R1 for assisting fed length of film 1 to detour around the upper left extension 11c of arm 11, to enter a space Sp between the upper and lower left extensions 11c, 12c, and to advance in a rightward forward direction in the space Sp or associated gap. The lower support member 12h is configured to support a pair of take-up side direction changing upper and lower rollers R2 for assisting fed length of film 1 to retreat in a leftward reverse direction in the space Sp or associated gap, to exit the space Sp, and to detour around the lower left extension 12c. The upper and lower support parts 11i, 12i are configured to support a pair of feed direction changing upper and lower rollers R3 for assisting fed length of film 1 to return in the space Sp.

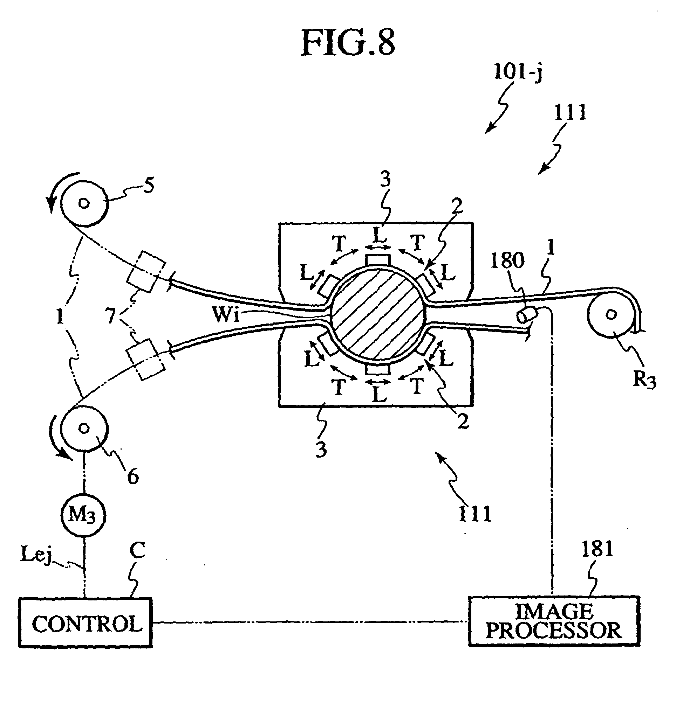

The film feed system FF1 includes a drive motor M3 for driving the take-up reel 6 to be rotated to wind or take up the film 1 (causing the supply reel 5 to release a length of film 1 to be fed), and a rotary encoder S3 for detecting rotation of the motor M3. The motor M3 is controlled from the controller C via a command line (Lcj) therebetween (refer to Fig. 8). A detection signal of the encoder S3 is input to the controller C. The supply reel 5 may also be driven to rotate by another drive motor provided with a rotary encoder therefor and controlled from the controller C, in synchronism with motor M3.

The film feed system FF1 further includes a pair of upper and lower locking devices 7 (Fig. 4) for locking feeds f of film 1 at the supply side (between reel 5 and roller R4, R1, or R3) and the take-up side (between roller R3, R2, or R5 and reel 6), respectively. The locking devices 7 are controlled from the controller C (Fig. 1), so that the film 1 is tensioned as necessary at the supply side and the take-up side. Like locking devices may be installed between reel 5 and roller R4 or R1 or rollers R1, R3, and between rollers R3, R2 or roller R2 or R5 and reel 6.

As tensioned between rollers R1 - R3 and R3 - R2, film 1 is stretched straight there, as in Fig. 3 where lap 100-j is open with hydraulic cylinder 13 contracted. When the lap is close with the cylinder 13 expanded as in Fig. 2, the film 1 is pressed between either set 2 of shoes 2a, 2b, 2c and work part Wi, conformally curving with surface regions of work part Wi to be lapped by upper and lower laps 110, as the work W is machine-longitudinally oscillated by drive mechanism 30 (Fig. 1).

In this embodiment, the film feed system FF1 is adapted for a sequence of intermittent feeds of film 1 to utilize interrupting intervals therebetween for a lapping service at each shoe set 2 by the film 1. For effective lapping and efficient use of film 1, the lap 100-j is configured to prohibit a repeated use of film region in each service, by setting ratios of shoe width L and shoe intervals T to feed f, such that:

$$T : L : f = n : 1 : n,$$

where n is the number of shoes associated with the service, i.e., in either shoe set 2.

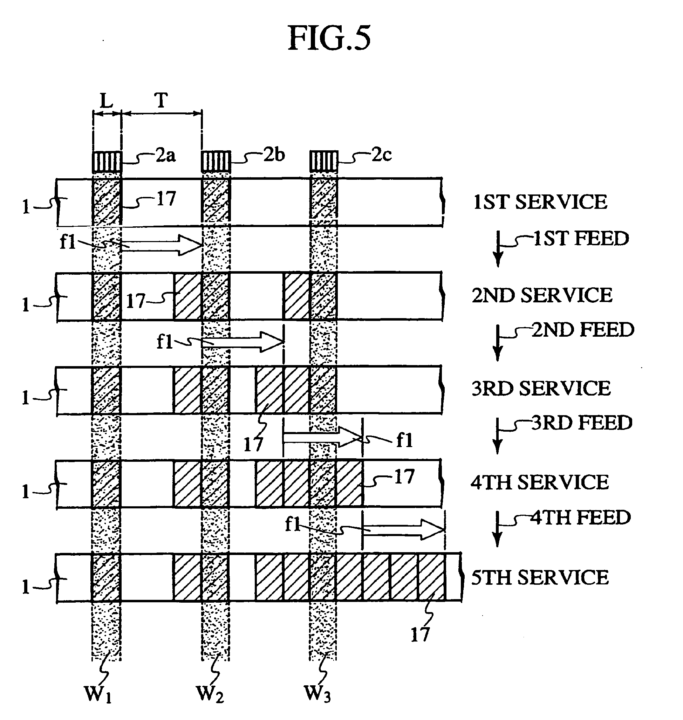

Fig. 5 shows a film feed timing at the lap 100-j. For n = 3, T = 3 x L and f = 3 x L (=f1).

In a first service, as work W is oscillated, the first, second, and third shoes 2a, 2b, 2c have first, second, and third dotted working zones $W_p$ (p=1 for 2a, p=2 for 2b, p=3 for 2c) of width L along their arcuate exposed sides, under which the film 1 has shadow regions of width L used for a lapping service at the face Sf (refer to Fig. 26). The first shoe 2a covers the first working zone $W_p$ (p=1), and uses a corresponding film region 17, which is now concerned.

After the first service, the film 1 is moved at a distance f1 = 3 x L by a first feed, whereby a right side of the film region 17 is displaced to an adjacent position to a left side of the second working zone $W_p$ (p=2), so that the film region 17 overlaps an L-width zone trailing just behind the second working zone $W_p$ (r=2).

In a second service, just ahead of the above-noted trailing zone, the second shoe 2b uses a corresponding new film region for lapping.

After the second service, the film 1 is moved at another distance f1 by a second feed, whereby the right side of film region 17 is displaced to an adjacent position to a left side of a trailing zone just behind the third working zone $W_p$ (p=3), so that the region 17 overlaps an L-width zone trailing after another trailing zone behind the third working zone $W_p$ (p=3).

In a third service, just ahead of the other trailing zone, the third shoe 2c uses a corresponding new film region for lapping.

After the third service, the film 1 is moved at still another distance f1 by a third feed, whereby the right side of film region 17 is displaced to a position of a right side of a preceding zone just ahead of the third working zone $W_p$ (p=3), so that the region 17 overlaps the preceding zone.

In a fourth service, just behind the above-noted preceding zone, the third shoe 2c uses a corresponding new film region for lapping.

After the fourth service, the film 1 is moved at yet another distance f1 by a fourth feed, whereby the right side of film region 17 is displaced to a position of a right side of an exceeding zone ahead of the third working zone $W_p$ (p=3) with connected three L-width zones in between, so that the region 17 overlaps the exceeding zone.

In a fifth service, just behind the above-noted three zones, the third shoe 2c uses a corresponding new film region for lapping. It is noted that past the last working zone $W_p$ (p=3), whole film regions are connected without unused regions therebetween, so that the substrate face Sf of film 1 has been fully and one-time used, allowing for uniform lapping service and efficient use of film 1.

(First modification of embodiment)

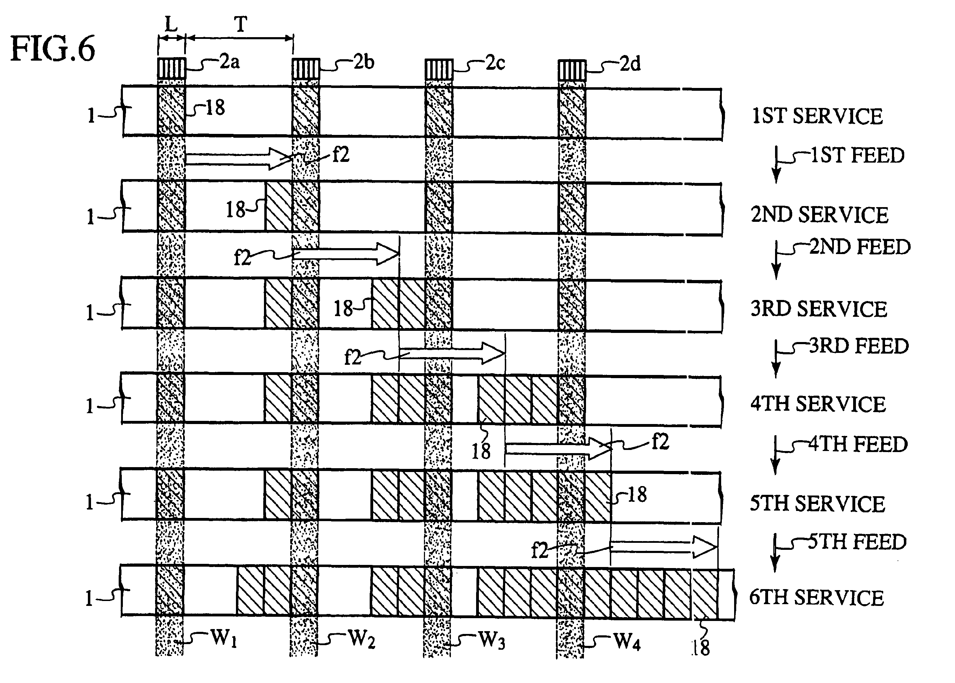

Fig. 6 shows a film feed timing at a lap 100-j of a lapping apparatus according to a first modification of the first embodiment, where n = 4, T = 4 x L, and f = 4 x L (= f2).

In this lap 100-j, each shoe set 2 has four shoes 2a, 2b, 2c, 2d covering first, second, third, and fourth dotted working zones Wq (q=1 for 2a, q=2 for 2b, q=3 for 2c, q=4 for 2d) of width L along their arcuate exposed sides, under which a film 1 has shadow regions of width L used for a lapping service at the face Sf. In a first service, the first shoe 2a covers the first working zone Wq (q=1), and uses a corresponding film region 18, which is now concerned and traced up to a sixth service following a fifth feed.

In this modification, past the last working zone $W_q$ (q=4), whole film regions are connected without unused regions therebetween, so that the substrate face Sf of film 1 has been fully and one-time used, allowing for uniform lapping service and efficient use of film 1.

(Second modification of embodiment)

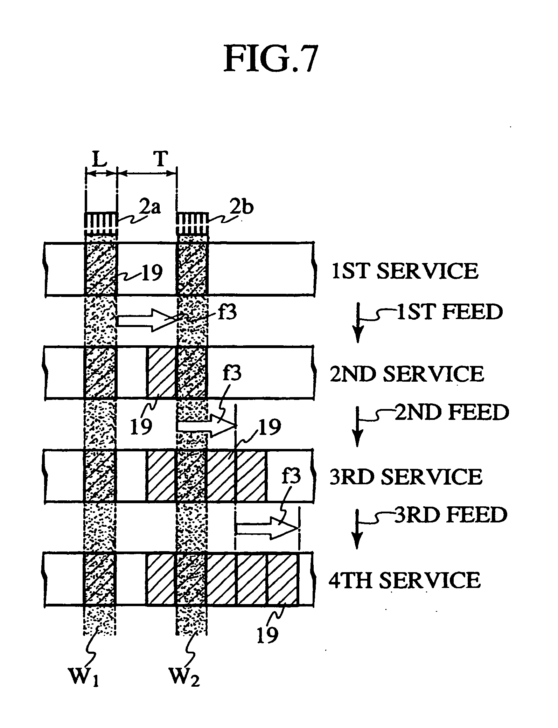

Fig. 7 shows a film feed timing at a lap 100-j of a lapping apparatus according to a second modification of the first embodiment, where n = 2, T = 2xL, and f = 2 x L (= f3).

In this lap 100-j, each shoe set 2 has two shoes 2a, 2b covering first and second dotted working zones $W_r$ (r=1 for 2a, r=2 for 2b) of width L along their arcuate exposed sides, under which a film 1 has shadow regions of width L used for a lapping service at the face Sf. In a first service, the first shoe 2a covers the first working zone $W_r$ (r=1), and uses a corresponding film region 19, which is now concerned and traced up to a fourth service following a third feed.

In this modification, past the last working zone $W_r$ (r=4), whole film regions are connected without unused regions therebetween, so that the substrate face Sf of film 1 has been fully and one-time used, allowing for uniform lapping service and efficient use of film 1.

(Third modification of: embodiment)

Fig. 8 shows a control system for a lap 101-j of a lapping apparatus according to a third modification of the first embodiment.

This modification is different from the embodiment 100 in that the substrate face Sf of a film 1 is detected for unused or reusable regions for a lapping service at a shoe set 2 of a lower lap 111 of the lap 101-j, by a camera 180 arranged therefor near a detour of film path between upper and lower shoe cases 3, and that picture data from camera 180 is processed by an image processor 181, to be input to a controller C.

At the controller C, input data is processed for generation of commands to be output via a branch line Lcj to a drive motor M3 of a take-up reel 6, as well as to locking device(s) 7, as necessary to effect a correction of film feed f (Fig. 4), to avoid using (in a service at the shoe set 2 of lower lap 111) more clogged regions than after a reference service at a shoe set 2 of an upper lap 111 of the lap 101-j.

Work W (Fig. 1) may be a camshaft, and work part Wi (Fig. 4) may be a cam lobe. In such a case, film feed is controlled not to reuse once-used regions even at the shoe set 2 of lower lap 2.

## Claims

1. A lapping apparatus (100) comprising:

   a lapping film (1);
   a film feeder (FF1) configured to feed the film (1);
   a first drive (20) configured to rotate a work (W);
   a second drive (30) configured to move the work (W) relative to the film (1);
   a shoe set (2);
   a shoe set handler (40) configured to handle the shoe set to press the film (1) against the work (W); and
   a deterioration delayer (C) configured to delay an abrasivity deterioration of the film (1),
   **characterized in that**
   the shoe set (2) comprises a first shoe (2a) of a width (L), and a second shoe (2b) of the width (L) at a distance (T) of the width (L) times an integer (n) from the first shoe (2a), and
   the deterioration delayer comprises a controller (C) configured to control the film feeder (FF1) to feed the film (1) at a distance of the width (L) times the integer.

2. The lapping apparatus (100, 101-j) as claimed in claim 1, wherein
   the shoe set (2) comprises a number of shoes (2a, 2b, 2c) equal to the integer (n).

3. The lapping apparatus (101-j) as claimed in claim 1 or 2, wherein
   the shoe set comprises a first shoe set (2a, 2b, 2c), and a second shoe set (2a, 2b, 2c), and
   the control system further comprises a detector (180, 181) configured to detect a condition of an abrasive face (Sf) of the film (1) between the first shoe set (2a, 2b, 2c) and the second shoe set (2a, 2b, 2c), wherein the control system feeds the film in dependence on the condition detected by the detector (180, 181).

4. A lapping method comprising:

   feeding a lapping film (1);
   rotating a work (W);
   moving the work (W) relative to the film (1);
   handling a shoe set (2) to press the film (1) against the work (W); and
   delaying an abrasivity deterioration of the film (1),
   **characterized in that**
   the shoe set (2) comprises a first shoe (2a) of a width (L), and a second shoe (2b) of the width (L) at a distance (T) of the width (L) times an integer (n) from the first shoe (2a), and
   the delaying comprises controlling the film feeder (FF1) to feed the film (1) at a distance of the width (L) times the integer.

5. The lapping method as claimed in claim 4, wherein the shoe set (2) comprises a number of shoes (2a, 2b, 2c) equal to the integer (n).

6. The lapping method as claimed in claim 4, wherein the pressing of the shoe set comprises pressing a first shoe set (2a, 2b, 2c), and a second shoe set (2a, 2b, 2c), and the feeding of the lapping film comprises detecting a condition of an abrasive face (Sf) of the film (1) between the first shoe set (2a, 2b, 2c) and the second shoe set (2a, 2b, 2c).

## Patentansprüche

1. Läppvorrichtung (100), umfassend:

   eine Läppfolie (1);
   eine Folienzuführung (FF1), um die Folie (1) zuzuführen;
   einen ersten Antrieb (20), um ein Werkstück (W) zu drehen;
   einen zweiten Antrieb (30), um das Werkstück (W) relativ zur Folie (1) zu bewegen;
   einen Backensatz (2);
   einen Backensatz-Antrieb (40) zum Antreiben des Backensatzes, um die Folie (1) gegen das Werkstück (W) zu drücken; und
   einen Verschlechterungsverzögerer (C), um eine Verschlechterung der Abriebfestigkeit der Folie (1) zu verzögern,
   **dadurch gekennzeichnet, dass**
   der Backensatz (2) eine erste Backe (2a) mit einer Breite (L) und eine zweite Backe (2b) mit der Breite (L) in einem Abstand (T) der Breite (L) mal einer Ganzzahl (n) von der ersten Backe (2a) aufweist,

und

der Verschlechterungsverzögerer eine Steuerung (C) umfasst, um die Folienzuführung (FF1) zu steuern, um die Folie (1) mit einem Abstand der Breite (L) mal der Ganzzahl zuzuführen.

**2.** Läppvorrichtung (100, 101-j) nach Anspruch 1, wobei der Backensatz (2) eine Anzahl von Backen (2a, 2b, 2c) gleich der Ganzzahl (n) umfasst.

**3.** Läppvorrichtung (101-j) nach Anspruch 1 oder 2, wobei der Backensatz einen ersten Backensatz (2a, 2b, 2c) und einen zweiten Backensatz (2a, 2b, 2c) umfasst, und

das Steuersystem ferner einen Detektor (180, 181) umfasst, um einen Zustand einer Abriebfläche (Sf) der Folie (1) zwischen dem ersten Backensatz (2a, 2b, 2c) und dem zweiten Backensatz (2a, 2b, 2c) zu erfassen, wobei das Steuersystem die Folie in Abhängigkeit von dem vom Detektor (180, 181) erfassten Zustand zuführt.

**4.** Läppverfahren, umfassend:

Zuführen einer Läppfolie (1);
Drehen eines Werkstücks (W);
Bewegen des Werkstücks (W) relativ zur Folie (1);
Antreiben eines Backensatzes (2), um die Folie (1) gegen das Werkstück (W) zu drücken; und
Verzögern einer Verschlechterung der Abriebfestigkeit der Folie (1),
**dadurch gekennzeichnet, dass**
der Backensatz (2) einen ersten Backen (2a) mit einer Breite (L) und einen zweiten Backen (2b) mit der Breite (L) in einem Abstand (T) der Breite (L) mal einer Ganzzahl (n) von der ersten Backe (2a) aufweist, und
das Verzögern die Steuerung der Folienzuführung (FF1) umfasst, um die Folie (1) mit einem Abstand der Breite (L) mal der Ganzzahl zuzuführen.

**5.** Läppverfahren nach Anspruch 4, wobei der Backensatz (2) eine Anzahl von Backen (2a, 2b, 2c) gleich der Ganzzahl (n) umfasst.

**6.** Läppverfahren nach Anspruch 4, wobei das Drücken des Backensatzes ein Drücken eines ersten Backensatzes (2a, 2b, 2c) und eines zweiten Backensatzes (2a, 2b, 2c) umfasst, und
das Zuführen der Läppfolie ein Erfassen eines Zustandes einer Abriebfläche (Sf) der Folie (1) zwischen dem ersten Backensatz (2a, 2b, 2c) und dem zweiten Backensatz (2a, 2b, 2c) umfasst.

**Revendications**

**1.** Appareil de rodage (100) comprenant:

un film de rodage (1);
un dispositif d'alimentation en film (FF1) configuré pour amener le film (1);
un premier entraînement (20) configuré pour faire tourner une pièce traitée (W) ;
un deuxième entraînement (30) configuré pour déplacer la pièce traitée (W) par rapport au film (1);
un ensemble de sabots (2) ;
un dispositif de manipulation (40) configuré pour manipuler l'ensemble de sabots pour presser le film (1) contre la pièce traitée (W) ; et
un retardateur de détérioration (C) configuré pour retarder la détérioration de l'abrasivité du film (1),
**caractérisé en ce que**
l'ensemble de sabots (2) comprend un premier sabot (2a) de largeur (L) et un deuxième sabot (2b) de largeur (L) à une distance (T) de la largeur (L) fois un entier (n) par rapport au premier sabot (2a), et
le retardateur de détérioration comprend un contrôleur (C) configuré pour commander le dispositif d'alimentation en film (FF1) pour amener le film (1) à une distance de la largeur (L) fois l'entier.

**2.** Appareil de rodage (100, 101-j) selon la revendication 1, dans lequel l'ensemble de sabots (2) comprend un nombre de sabots (2a, 2b, 2c) égal à l'entier (n).

**3.** Appareil de rodage (101-j) selon la revendication 1 ou 2, dans lequel :

l'ensemble de sabots comprend un premier ensemble de sabots (2a, 2b, 2c) et un deuxième ensemble de sabots (2a, 2b, 2c), et
le système de commande comprend en outre un détecteur (180, 181) configuré pour détecter un état d'une face abrasive (Sf) du film (1) entre le premier ensemble de sabots (2a, 2b, 2c) et le deuxième ensemble de sabots (2a, 2b, 2c), le système de commande faisant avancer le film en fonction de l'état détecté par le détecteur (180, 181).

**4.** Procédé de rodage comprenant les opérations consistant à :

amener un film de rodage (1) ;
faire tourner une pièce traitée (W) ;
déplacer la pièce traitée (W) par rapport au film (1) ;

7

manipuler un ensemble de sabots (2) pour presser le film (1) contre la pièce traitée (W) ; et retarder une détérioration de l'abrasivité du film (1),

**caractérisé en ce que**

l'ensemble de sabots (2) comprend un premier sabot (2a) de largeur (L) et un deuxième sabot (2b) de largeur (L) à une distance (T) de la largeur (L) fois un entier (n) par rapport au premier sabot (2a), et

le retard comprend le fait de commander le dispositif d'alimentation en film (FF1) pour amener le film (1) à une distance de la largeur (L) fois l'entier.

5. Procédé de rodage selon la revendication 4, dans lequel l'ensemble de sabots (2) comprend un nombre de sabots (2a, 2b, 2c) égal à l'entier (n).

6. Procédé de rodage selon la revendication 4, dans lequel le pressage de l'ensemble de sabots comprend le fait de presser un premier ensemble de sabots (2a, 2b, 2c) et un deuxième ensemble de sabots (2a, 2b, 2c), et l'alimentation du film de rodage comprend le fait de détecter un état d'une face abrasive (Sf) du film (1) entre le premier ensemble de sabots (2a, 2b, 2c) et le deuxième ensemble de sabots (2a, 2b, 2c).

FIG.1

# FIG.2

# FIG.3

EP 1 447 172 B1

# FIG.4

12

# FIG.5

1ST SERVICE

1ST FEED

2ND SERVICE

2ND FEED

3RD SERVICE

3RD FEED

4TH SERVICE

4TH FEED

5TH SERVICE

# FIG.6

1ST SERVICE

↓ 1ST FEED

2ND SERVICE

↓ 2ND FEED

3RD SERVICE

↓ 3RD FEED

4TH SERVICE

↓ 4TH FEED

5TH SERVICE

↓ 5TH FEED

6TH SERVICE

EP 1 447 172 B1

# FIG.7

# FIG.8

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7237116 A
- DE 19602974 A
- EP 1027956 A